# EUROPÄISCHE PATENTSCHRIFT

(11) **EP 1 044 775 B1**
(45) Veröffentlichungstag und Bekanntmachung des Hinweises auf die Patenterteilung: **23.02.2005**
(21) Anmeldenummer: 00105387.5
(22) Anmeldetag: 21.03.2000
(51) Int. Cl.: B29C 33/30, B29C 33/36, B29C 49/38, B29L 16/00

(54) **Wechselcorrugator**
Corrugator with means to exchange moulding elements
Machine de moulage de tubes ondulés avec dispositif d'échange d'éléments de moulage

(30) Priorität: 01.04.1999 DE 19914974
(43) Veröffentlichungstag der Anmeldung: 18.10.2000
(73) Patentinhaber: FRÄNKISCHE ROHRWERKE, GEBR. KIRCHNER GmbH & Co., D-97486 Königsberg (DE)
(72) Erfinder: Hoffmann, Thomas, 97486 Königsberg (DE); Weppert, Rainer, 97437 Hassfurt (DE)
(74) Vertreter: Schwabe - Sandmair - Marx

(56) Entgegenhaltungen:
- WO-A-00/67980
- WO-A-95/30526
- DE-A- 3 936 090
- DE-A- 19 600 827
- US-A- 3 430 292
- US-A- 3 881 851
- PATENT ABSTRACTS OF JAPAN vol. 1995, no. 08, 29. September 1995 (1995-09-29) & JP 07 125044 A (SEKISUI CHEM CO LTD), 16. Mai 1995 (1995-05-16)
- PATENT ABSTRACTS OF JAPAN vol. 1998, no. 10, 31. August 1998 (1998-08-31) & JP 10 138338 A (SEKISUI CHEM CO LTD), 26. Mai 1998 (1998-05-26)

## Beschreibung

Die Erfindung betrifft eine Formvorrichtung, insbesondere einen Corrugator, zur Herstellung von Rohren, bevorzugt Wellrohren, mit wenigstens zwei Folgen von umlaufenden Formbacken mit bevorzugt jeweils der gleichen Formausprägung, die in einem vorgegebenen Bereich einen Formkanal bilden, wobei die Folgen in jeweiligen Umlaufführungen geführt sind, gemäß dem Oberbegriff des Patentanspruchs 1.

Im Stand der Technik sind Corrugatoren zur Herstellung von Wellrohren hinreichend bekannt. Solange Wellrohre in Längsrichtung mit gleichbleibender Form hergestellt werden sollen, lassen sich herkömmliche Endloscorrugatoren mit umlaufenden Formbacken problemlos einsetzen. Sollen Wellrohre mit bestimmten Sonderprofilabschnitten hergestellt werden, ist es erforderlich, diese Sonderprofile in Form von entsprechenden Formbacken, beispielsweise Formbacken für Muffen oder dergleichen, in eine Formbackenkette einzufügen. Hier ergibt sich nun das Problem, daß diese Sonderausformungen an den Wellrohren oder allgemein an Rohren nur an jeweils gleichen und damit starr vorgegebenen Stellen vorgesehen werden können. Eine variable Sonderformgebung im Verlaufe eines endlos hergestellten Wellrohres ohne Unterbrechung des Herstellungsprozesses im Corrugator ist nicht möglich. Die übliche Vorgehensweise besteht darin, Sonderprofile an bestimmten Stellen in das Wellrohr einzuformen, was dann in regelmäßigen Abschnitten erfolgen muß. Diese Regelmäßigkeit ergibt sich dann aus der spezifischen Länge einer bestimmten Formbackenkette. Das heißt, wird ein Sonderprofil alle drei Formbackenkettenlängen benötigt, taucht dieses in dem betreffenden Wellrohrabschnitt dennoch dreimal auf, wobei jedoch zwei dieser Sonderprofile unbenutzt sind. Diese unbenutzten Sonderprofile können natürlich Probleme bereiten, da sie Schwachstellen sein können.

Im Stand der Technik ist aus der US 4,325,685 A1 ein Versuch bekannt, bei einem vertikal ausgerichteten Corrugator eine gewisse Flexibilität dadurch zu schaffen, daß Formbacken mit mehreren Profilen vorgesehen werden. Unter diesen mehreren Profilen sind auch Sonderprofile. Die auf diese Weise äußerst breiten Formbacken können bei vertikal angeordnetem Maschinentisch horizontal über Weichenanordnungen verschoben werden, so daß bei Bedarf ein Sonderprofil eingefügt werden kann. Bei diesem Lösungsansatz ist es für die erwünschte Flexibilität jedoch erforderlich, daß jeder Formbacken einer Formbackenfolge entsprechend komplex mit mehreren Profilen, und darunter auch Sonderprofilen, ausgebildet ist. Dies führt dazu, daß ein Corrugator dieser bekannten Art äußerst aufwendig, teuer und zudem noch anfällig ist. Zudem ergibt sich aus der seitlichen Positionierbarkeit die Problematik, daß die Formbacken nicht exakt zu dem Formkanal ausgerichtet werden können, wodurch sich Unregelmäßigkeiten am Rohrprofil ergeben.

Auch die EP 0 048 113 A2 und die US 3,981,663 zeigen Abwandlungen von Corrugatoren, die jedoch ebenfalls nicht dazu in der Lage sind, die oben aufgezeigten Problematiken aus der Welt zu schaffen.

Die US-A-3,881,851 bezieht sich auf Maschinen zur Herstellung der Isolation zwischen Leitern von koaxialen Leiterpaaren (ebenfalls Koaxialkabel genannt), die zur Übertragung von Signalen hoher und sehr hoher Frequenz, insbesondere Telekommunikationssignale, geeignet sind. Die Maschine zur Formung der Isolation von koaxialen Paaren benutzt das Extrudieren eines thermoplastischen Rohrs, das mit Druckluft gefüllt ist und periodisch durch eine Reihe von kleinen, im Wesentlichen gleichen, metallischen Formen zusammengedrückt bzw. eingekerbt wird, die längs einer endlosen Kette nebeneinander liegen, welche mit einer linearen Geschwindigkeit angetrieben wird, die gleich der Vorschubgeschwindigkeit des Innenleiters des koaxialen Paares ist.

Die US-A-3,430,292 betrifft eine Vorrichtung zum Herstellen hohler Kunststoffgegenstände von unbestimmter Länge, die einen Hauptabschnitt ihrer Länge mit einem Längsabschnittaufbau aufweisen, und Nebenabschnitte ihrer Länge weisen einen anderen Längsabschnittaufbau auf, um dadurch einzelne hohle Gegenstände vorzusehen, die an ihrem einen Ende oder beiden Enden einen geformten Aufbau haben, der abweichend von ihren zwischen den Enden liegenden Abschnitten ist.

Es ist folglich die Aufgabe gemäß der vorliegenden Erfindung, eine Formvorrichtung, insbesondere einen Corrugator, vorzuschlagen, der bei einem akzeptablen Investitionsaufwand flexibel einsetzbar ist, um Rohre und bevorzugt Wellrohre herstellen zu können, die flexibel mit Sonderprofilen versehen werden können.

Die besagte Aufgabe wird gemäß der Erfindung mittels einer Formvorrichtung soweit als möglich bzw. vollständig gelöst, die wenigstens eine Wechseleinrichtung entlang wenigsten einer der Umlaufführungen wenigstens einer der Formbackenfolgen aufweist, wobei wenigstens ein Wechselformbacken vorgesehen ist, der ein Sonderprofil aufweist bzw. der eine andere Rohrformausprägung hat, wobei im Verlauf der Umlaufführung(en) bevorzugt nahe der Wechseleinrichtung, eine Puffereinrichtung bzw. -strecke angeordnet ist, die bei Aktivierung der Wechseleinrichtung eine Rückstaustrecke kompensiert, wobei bevorzugt die Puffereinrichtung der Wechseleinrichtung zugeordnet ist.

Es versteht sich von selbst, daß hier auch Formbacken und entsprechend auch Wechselformbacken eingesetzt werden können, die mehr als einen Wellrohrtyp bzw. mehr als einen Wellrohrdurchmesser bereitstellen können. Die anderen Wellrohrtypen bzw. Wellrohrdurchmesser können dann durch Verstellung des Maschinentisches gegenüber einer Düse eines Extruders, aus dem der weichplastisch verformbare Kunststoffschlauch zur Herstellung des Rohres bzw. Wellrohres herauskommt, zum Einsatz gelangen. Dabei muß jedoch der Produktionsprozeß unterbrochen werden. Natürlich kann auch die Extruderdüse verstellt werden oder es können Extruderdüsenweichen oder Verlängerungsstücke eingesetzt werden, um die anderen Formbacken zur Herstellung anderer Wellrohrtypen bzw. Wellrohrdurchmesser in Aktion zu bringen.

Bei einem Formbackenwechsel, der erfindungsgemäß mit einer entsprechenden Wechseleinrichtung erfolgt, wird nur eine geringe Anzahl von Formbacken ersetzt.

Vorteilhafterweise sind entlang jeder der Formbackenfolgen wenigstens jeweils eine Wechseleinrichtung vorgesehen. Bei Bedarf können entlang einer Formbackenfolge bzw. einer Umlaufführung auch zwei oder mehrere Wechseleinrichtungen vorgesehen sein.

Die Wechseleinrichtung weist wenigstens zwei Kammern auf, die jeweils einen Ein- und einen Ausgang aufweisen, wobei die Kammern wenigstens angenähert wie die Umlaufführung ausgebildet sind. Auf diese Weise kann immer jeweils eine Kammer als Teil einer Umlaufführung eingesetzt werden, um als Führung für die Formbackenfolge durch die Wechseleinrichtung bzw. die betreffende Kammer der Wechseleinrichtung zu dienen. Die jeweils nicht in die Umlaufführung eingesetzte Kammer dient als Reservoir für Wechselformbacken, das heißt Formbacken mit Sonderprofilen, oder für Formbac ken, die gegen Wechselformbacken ausgetauscht worden sind.

Natürlich kann eine entsprechende Wechseleinrichtung auch mit drei oder mehr Kammern versehen sein, die je nach Bedarf in die Umlaufführung eingegliedert oder aus dieser ausgegliedert werden, um andere Formbacken bzw. Wechselformbacken mit Sonderprofilen, Markierungen oder dergleichen in die im Betrieb befindliche Formbakkenfolge einzufügen.

Wenigstens eine der Kammern der Wechseleinrichtung weist wenigstens einen Wechselformbacken auf. Natürlich kann eine entsprechende Kammer auch mehrere Wechselformbacken aufweisen, je nach dem gewünschten Profil eines speziellen Rohrproduktes bzw. Wellrohrproduktes.

Zwar kann die Wechseleinrichtung auch von Hand betätigt werden, jedoch ist es vorteilhaft, wenn ein Antriebsabschnitt vorgesehen ist, um eine Kammer mit wenigstens einem Formbacken aus der Umlaufführung zu entfernen und eine andere Kammer mit wenigstens einem Wechselformbacken, beispielsweise mit einem Sonderprofil, in die Umlaufführung einzufügen.

Gemäß der Erfindung ist es auch möglich, daß die Anzahl der Formbacken, die in einer Formbackenfolge enthalten sind, geringer ist als die maximale Anzahl von Formbacken, die in einer Umlaufführung aufgenommen werden kann. Dabei ist eine Beförderungseinrichtung vorzusehen, um die Formbacken außerhalb des Formkanals schneller zu bewegen als im Verlauf des Formkanals. Auf diese Weise ist es möglich, weniger Formbacken in dem Corrugator einzusetzen, als dies nötig wäre, wenn eine geschlossene Formbackenfolge bzw. Formbackenkette nötig wäre. Dies kann beispielsweise über Vortriebsgewinde mit unterschiedlicher Steigung erfolgen.

Bei großen Corrugatoren ist der Wechsel einer Formbacke nicht so schwierig, da aufgrund der geringen Umlaufgeschwindigkeit viel Zeit vorhanden ist, um einen Formbacken zu entnehmen und durch einen anderen zu ersetzen.

Vorteilhafterweise wird die Wechseleinrichtung bzw. werden die Wechseleinrichtungen in einem Bereich der Umlaufführung angeordnet, indem der Formkanal offen ist. Mit anderen Worten, die Formbacken sind in dem Bereich, in dem die Wechseleinrichtung bzw. Wechseleinrichtungen angeordnet sind, nicht geschlossen, d.h. nicht mit dem Rohr in Eingriff geschlossen. Besonders vorteilhaft lassen sich die Wechseleinrichtungen im linearen Bereich auf der Rücklaufseite des Formkanals der erfindungsgemäßen Einrichtung bzw. des erfindungsgemäßen Corrugators plazieren.

Bevorzugt weist der Antriebsabschnitt der Wechseleinrichtung einen Querschieber auf, der die eine der Kammern in die Umlaufführung(en) einfügt bzw. die in der Umlaufführung befindliche Kammer aus dieser entfernt. Der Querschieber ist bevorzugt dazu ausgestaltet, eine Linearbewegung durchzuführen. Diese Linearbewegung verläuft insbesondere in der Ebene der Umlaufführungen bzw. in der Ebene des den Umlaufführungen zugeordneten Maschinentisches.

Der Antriebsabschnitt kann elektromechanisch, elektromagnetisch, hydraulisch bzw. pneumatisch arbeiten: Als pneumatisch arbeitende Ausführungsform kann dieser insbesondere mittels eines Pneumatikzylinders arbeiten. Im Falle eines elektromechanischen Antriebsabschnittes kann beispielsweise ein Elektromotor in Verbindung mit einem Schwungrad die möglichst abrupte Bewegung der Wechseleinrichtung zum Wechseln von Formbacken durchführen. Elektromagnetisch kann ein Antriebsabschnitt beispielsweise über Magnete durchgeführt werden, deren Polungen gewechselt werden, so daß eine Abstoßung bzw. Anziehung erfolgt.

Die Formvorrichtung gemäß Anspruch 1 hat den Vorteil, daß die Bewegung beim Wechseln der Formbacken nicht so schnell und abrupt durch-geführt wird, wobei es verhindert wird, daß es mit der ansonsten weiter laufenden Formbackenfolge zu Kollisionen kommt. Dabei kann die Puffereinrichtung ganz besonders vorteilhaft derart realisiert werden, daß ein in Umlaufrichtung bewegliches Umlaufkanalmodul vorgesehen ist, das mittels einer Federeinrichtung bevorzugt entgegen der Umlaufrichtung vorgespannt ist. Im Falle eines Wechsels eines Formkanalabschnittes, das heißt einer Kammer der Wechseleinrichtung und damit von Formbacken gegen Wechselformbacken, kann das bewegliche Umlaufkanalmodul als Teil der Umlaufführung entgegen der Umlaufrichtung bewegt werden, um anschließend, wenn die neue Kammer und damit die neuen Formbacken, das heißt die Wechselformbacken gegebenenfalls mit Sonderprofil, in die Formbackenfolge eingegliedert worden sind, zurückgetrieben über eine Federeinrichtung wieder in die Grundposition zurückschnellen, um bei einem späteren Wechsel wieder als Puffer zu dienen.

Dabei kann die Pufferstrecke bzw. der Federweg einstellbar bzw. wenigstens so groß sein, so daß bei einer vorgegebenen Umlaufgeschwindigkeit der Formbacken und einer vorgegebenen, bevorzugt veränderbaren Bewegungsgeschwindigkeit der Wechseleinrichtung ein Rückstau aufgefangen werden kann.

Um eine Koordination der Wechseloperation im Verhältnis zu dem Umlauf der Formbacken durchführen zu können, ist es vorteilhaft, wenn eine Fühleinrichtung angeordnet ist, um mit dieser die Position wenigstens eines Formbackens zu fühlen. Aufgrund des Fühlergebnisses kann die Wechseleinrichtung bzw. können die Wechseleinrichtungen derart aktiviert werden, daß die eine Kammer gegen die andere Kammer in der laufenden Formbackenfolge austauschbar ist, wenn die Kammerbegrenzungen bzw. die Begrenzungen der Wechseleinrichtung(en) nicht mit Formbacken kollidieren bzw. mit Stoßstellen zwischen den Formbacken fluchten.

Die Fübleinrichtung bzw. Fühleinrichtungen können prinzipiell an beliebigen Stellen der erfindungsgemäßen Einrichtung angeordnet sein, wobei dann über eine Recheneinrichtung, beispielsweise einen Computer, auf den Ort einer Wechseleinrichtung bzw. die Orte von Wechseleinrichtungen entlang einer Umlaufführung bzw. entlang der Umlaufführungen zurückgerechnet werden muß.

Vorteilhafterweise ist der erfindungsgemäßen Formvorrichtung eine Wechseleinrichtung mit einem Platzhalter zugeordnet. Ein solcher Platzhalter wird an einer Stelle, wo ein Wechselformbacken bzw. eine Wechselform eingesetzt werden soll, eingesetzt, um entweder mit der wandernden Formbackenfolge mitzuwandern oder aber in die wandernde Formbackenfolge einzugreifen, um bei der Entnahme eines normalen Formbackens dessen Platz in der Formbackenfolge zu halten, so daß hier einfach ein Wechselformbacken eingesetzt werden kann.

Demnach kann der Platzhalter eine Trägerbacke sein, an der ein Formprofilabschnitt festlegbar ist, wobei die Wechseleinrichtung einen Wechsel lediglich des Formprofilabschnittes vornimmt. Das heißt über eine Rastverbindung oder dergleichen ist ein Formprofil an einer Trägerbacke, die mit der Formbackenfolge mitläuft, festgelegt. Der Formbacken- bzw. Formprofilabschnitt wird dann abgenommen, wobei der Eingriff zwischen dem Platzhalter bzw. der Trägerbacke und dem Formprofilabschnitt aufgehoben wird. Sobald der auszuwechselnde Formprofilabschnitt entfernt ist, verrastet die Wechseleinrichtung einen anderen Sonderformprofilabschnitt mit dem Platzhalter bzw. der Trägerbacke. Es ist natürlich möglich, statt einer Verrastung ein Einschieben in Führungen an der Trägerbacke durchzuführen oder die Wechselform bzw. den Sonderformprofilabschnitt anders an dem Platzhalter bzw. der Trägerbacke festzulegen.

Auch andere Arten von Platzhaltern können zum Einsatz gelangen, wobei, wie oben bereits angedeutet, der Platzhalter einen Übergriffsbereich aufweisen kann, der von einem Formbacken zu einem übernächsten Formbacken übergreift. Dabei weist der Platzhalter Eingriffsabschnitte auf, die in den Formbacken und den übernächsten Formbacken eingreifen, um auf diese Weise zu verhindern, daß bei Entnahme eines Formbackens, der zwischen dem einen Formbacken und dem übernächsten Formbacken in der Formbackenfolge angeordnet ist, der frei werdende Platz ausgefüllt wird. Das heißt, der Übergriffsbereich sollte wenigstens die Abmessungen eines Formbackens in Bewegungsrichtung der Formbackenfolge aufweisen. Auf diese Weise kann dann zunächst der zu wechselnde Formbacken durch den Platzhalter substituiert werden und anschließend kann ein Wechselformbacken mit einem Sonderprofil an die Stelle des Platzhalters gesetzt werden. Sobald der Wechselformbacken an seinem Bestimmungsort innerhalb der wandernden Formbackenfolgen ist, kann der Platzhalter wieder entfernt werden.

Vorteilhafterweise sind die Eingriffsabschnitte so ausgebildet, daß sie zu entsprechenden, üblicherweise vorhandenen Strukturen an den Formbacken der wandernden Formbackenfolge passen. Dementsprechend sollten die Eingriffsabschnitte z.B. als Zahnungen ausgebildet sein, die in Ausnehmungen bzw. Zahnungen der in der Formbackenfolge mitlaufenden Formbacken eingreifen können.

Vorteilhafterweise kann die zuletzt beschriebene Art eines Platzhalters den Abstand zwischen den Formbacken vergrößern, beispielsweise einen in Längserstreckungsrichtung wirkenden Pneumatikzylinder oder dergleichen aufweisen, so daß der Abstand zwischen dem einen Formbacken und dem übernächsten Formbacken leicht erweitert werden kann, um bei dem Austauschprozeß einen Spielraum zu haben, der den Austausch erleichtert.

Vorteilhafterweise können für die Erleichterung des Austauschprozesses die beispielsweise als Zahnung ausgebildeten Eingriffsabschnitte so ausgebildet sein, daß sie mit einem Versatz zu der Zahnung der Formbacken vor und hinter dem auszutauschenden Formbacken in deren Zahnungen eingreifen, um bei dem Vorwärtstrieb der Eingriffsabschnitte in die Zahnungen der Formbacken diese aufgrund der Steigungen der Zahnungen um eine geringe Strecke auseinander zu treiben.

Eine weitere sehr vorteilhafte Ausführungsform ergibt sich, wenn an den Wendebereichen der Formbackenfolgen an einer Seite, gegebenenfalls auch an beiden Seiten, ein wenigstens zeitweise mit einer Formbackenfolge mitlaufender Magazinabschnitt angeordnet ist, an dem die Wechseleinrichtung bevorzugt mitlaufend vorgesehen ist.

Dabei kann der Magazinabschnitt als scheibenartiger Körper ausgebildet sein, der den gleichen Radius aufweist, wie der Innenradius der Formbackenfolge bzw. der Führungsabschnitt für die Formbackenfolge im Wende- bzw. Umkehrbereich der Formbackenfolgen. Bevorzugt wird der Magazinabschnitt immer synchron mitlaufen oder aber von Zeit zu Zeit, bei Bedarf, wenn an einer bestimmten Stelle ein Formbacken gegen einen Sonderprofilformbacken ausgetauscht wird, synchronisiert und dementsprechend synchron mitlaufen. Da in dem Wendebereich zwischen den Formbacken der Formbackenfolge sowieso radial weiter werdende Spalte klaffen, kann auch der Wendebereich für die Anordnung einer Wechseleinrichtung nach der Erfindung zu bevorzugen sein, da die Wahrscheinlichkeit für eine Verhakung in diesem Bereich gering ist und eine Synchronisation, sei sie zeitweise oder kontinuierlich, noch einfacher zu bewerkstelligen sein kann.

Vorteilhafterweise ist der wandernden Formbackenfolge im Wendebereich, dem Magazinabschnitt gegenüber, ein Park-Magazinabschnitt angeordnet. Formbacken, die auf der wandernden Formbackenfolge mittels der Wechseleinrichtung entnommen worden sind, können hier geparkt werden, bis sie wieder in die Formbackenfolge zurückgeführt werden sollen, wobei sie den Sonderprofilformbacken ersetzen. Auch hier, wie bei dem Magazinabschnitt, erfolgt entweder kontinuierlich eine Synchronisation oder zeitweise. Die kontinuierliche Synchronisation hat den Vorteil, daß der ausgewechselte Formbacken im Park-Magazinabschnitt automatisch, gesetzt den Fall, es treten keine Abweichungen bei dem Fortlauf der Formbackenfolge auf, immer zur rechten Zeit, die für einen Wechselprozeß geeignet ist, an der richtigen Stelle dem Sonderprofilformbacken gegenüber im Wendebereich zugegen ist.

Die einfügbaren Wechselformen bzw. Wechselformbacken können vorteilhafterweise für unterschiedlichste Verfahrensvarianten ausgebildet sein. So kann beispielsweise die Formvorrichtung als Corrugator für das Überdruckverfahren ausgebildet sein, das heißt, ausgehend von dem Extruder wird ein Überdruck in dem heißplastisch verformbaren Kunststoffschlauch erzeugt, so daß sich das Kunststoffmaterial an die Formbacken im Formkanal anlegt. Um beispielsweise Sonderprofile in das herzustellende Wellrohr einzubringen, können beispielsweise Wechselformbacken für ein Unterdruckverfahren eingewechselt werden. In diesem Fall muß der Corrugator gemäß der Erfindung natürlich auch wenigstens im Bereich des Formkanals Vakuumleitungen aufweisen, um über Öffnungen der Wechselformbacken für das Unterdruckverfahren zwischen dem Wechselformbacken und dem plastisch verformbaren Kunststoffschlauch einen Unterdruck erzeugen zu können. Da Corrugatoren für das Unterdruckverfahren hinreichend bekannt sind, soll auf das Unterdruckverfahren hier nicht weiter eingegangen werden, da diese Kenntnisse zum Kenntnisstand des Fachmannes gehören.

Vorteilhafterweise können Wechselformbacken auch mit Ausnehmungen versehen sein, um Gegenstände in die Ausnehmungen einzufügen, die mit dem Wellrohr während dessen Formung in der Formvorrichtung zu verbinden sind. Das heißt, in die Ausnehmungen können beispielsweise Rohrschellen oder dergleichen eingesetzt werden und mit dem Wellrohr während der Ausbildung des Wellrohres verbunden werden.

Es kann auch von Vorteil sein, wenn die Wechseleinrichtung mit einer Heizeinrichtung oder gegebenenfalls mit einer Kühleinrichtung versehen ist, um Formbacken bzw. Wechselformbacken aufzuheizen bzw. zu kühlen. Mittels derartig in der Temperatur modifizierter Formbacken bzw. Wechselformbacken können ebenfalls besondere Effekte erzielt werden, wobei beispielsweise ein Kunststoff über eine längere Zeit durch den aufgeheizten Wechselformbacken in einem plastisch verformbaren Zustand gehalten werden kann, beispielsweise um kompliziertere Formen in das Wellrohr bzw. in einen Wellrohrabschnitt, einen Muffenabschnitt oder dergleichen einzuformen.

Im Hinblick auf die Magazintechnik ist festzuhalten, daß zwar linear arbeitende Magazine bzw. Wechseleinrichtungen verwendet werden können, es jedoch auch ohne weiteres möglich ist, andere Arten von Magazinen einzusetzen, beispielsweise Revolvermagazine, bei denen in den verschiedenen Kammern Wechselformbacken bzw. Formbacken aufbewahrt werden, wobei die jeweiligen Kammern immer jeweils auch als Bestandteil der Umlaufführung dienen können müssen.

Nachfolgend wird die vorliegende Erfindung anhand von einer bevorzugten Ausführungsform unter Bezugnahme auf die beigefügten Darstellungen näher erläutert. Dabei werden weitere Merkmale, Vorteile und Zielsetzungen gemäß der Erfindung offenbart. In den Darstellungen zeigen:
- Fig. 1: eine schematische Schnittansicht, die durch einen Corrugator mit Merkmalen gemäß der Erfindung in der Ebene der umlaufenden Formbackenfolgen angesetzt ist;
- Fig. 2: einen senkrecht zu der Darstellungsebene gemäß Fig. 1 angelegten Teilschnitt durch einen erfindungsgemäß ausgebildeten Corrugator im Bereich der Wechseleinrichtung;
- Fig. 3: eine gemäß der Erfindung ausgebildete Ausführungsform in einer schematischen Ansicht eines Formbackenabschnitts mit Wechseleinrichtung; und
- Fig. 4: eine weitere Ausführungsform in einer schematische, perspektivischen Prinzipdarstellung.

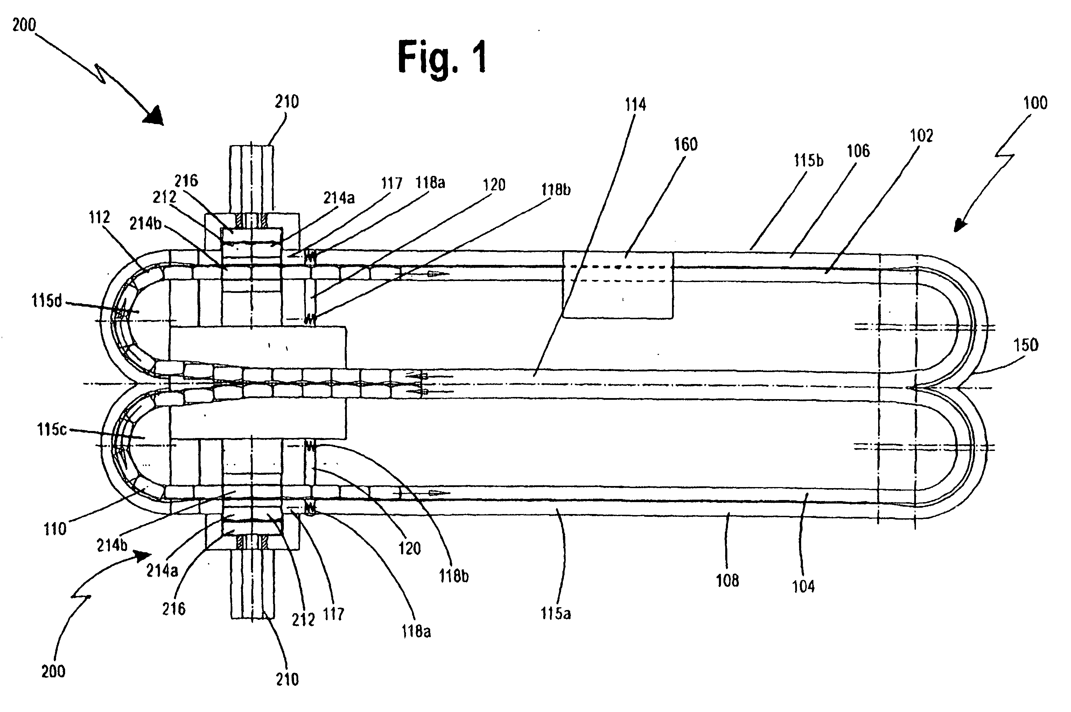

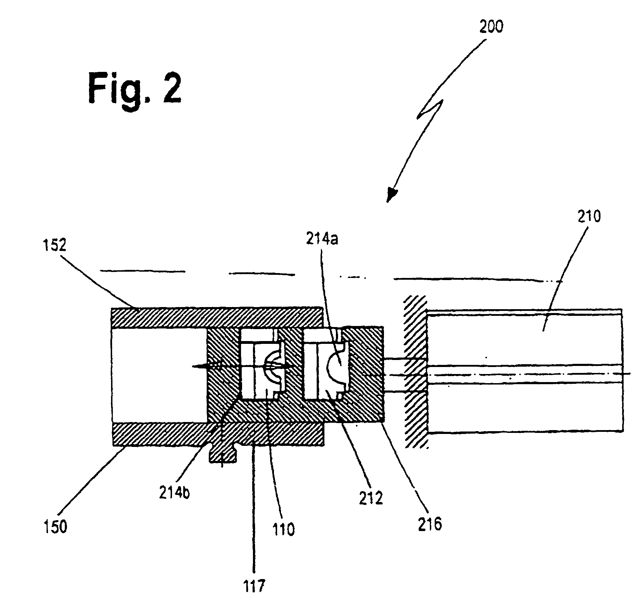

In den Figuren 1 und 2 sind identische oder wenigstens funktionsgleiche Bestandteile durch gleiche Bezugszeichen gekennzeichnet.

Die Fig. 1 zeigt eine erfindungsgemäße Formvorrichtung, insbesondere einen Corrugator, der allgemein mit dem Bezugszeichen 100 benannt ist.

Die Formvorrichtung, die nachfolgend als Corrugator 100 bezeichnet wird, weist zwei Formbackenfolgen 102, 104 auf, die in jeweiligen Umlaufführungen 106, 108 auf einem Maschinentisch 150 endlos umlaufen. Formbacken 110, 112 der beiden Formbackenfolgen 102, 104 bilden einen Formkanal 114, auf dessen Rücklaufseiten die Formbackenhälften in den jeweiligen Bereichen 115a, 115b unbenutzt sind, das heißt einseitig offen sind. An den Enden der Formbackenfolgen 102, 104 sind Wendebereiche 115c, 115d, in denen ein Richtungswechsel stattfindet.

Die Bereiche 115a, 115b sind zur Anordnung von Wechseleinrichtungen 200 zu bevorzugen und es können eine oder mehrere Wechseleinrichtungen 200 entlang der Bereiche 115a, 115b angeordnet werden.

Im Bereich 115b ist ein Sensor 160 vorgesehen, der die Position der Formbacken bestimmt, und zwar unmittelbar oder rechnerisch in bezug auf die Wechseleinrichtungen 200, um einen Wechselprozeß zu passender Zeit durchführen zu können. Wenn lediglich eine Sensoreinrichtung 160 vorgesehen ist, setzt dies eine vollkommene Synchronisation des Laufes der beiden Formbackenfolgen voraus. Für den Fall, daß eine Synchronisation nicht vollkommen garantiert werden kann, kann es von Vorteil sein, jeder der Formbakkenfolgen 102, 104 jeweils wenigstens eine Sensoreinrichtung 160 zuzuordnen.

Die jeweiligen Wechseleinrichtungen 200 weisen jeweils zwei Kammern 214a, 214b auf, die als austauschbare Bestandteile der Umlaufführungen 106, 108 ausgebildet sind. Die Kammer 214a weist Wechselformbacken 212, gegebenenfalls mit Sonderprofilen für bestimmte Abschnitte von Rohren bzw. Wellrohren (nicht dargestellt) auf, die im Falle der Aktivierung der Wechseleinrichtungen 200 gegen Formbacken 110, 112 ausgetauscht werden können, die in den jeweiligen Formbackenfolgen 102, 104 endlos umlaufen.

Die Wechseleinrichtungen 200 weisen jeweilige Rahmen 216 auf, in die die Kammern 214a, 214b aufgenommen sind. Über einen Pneumatikzylinder 210 wird der Rahmen 216 bewegt, so daß wahlweise die Kammer 214a oder die Kammer 214b in die Umlaufführungen 106, 108 eingesetzt werden können.

Da es nicht möglich ist, einen Wechsel von der Kammer 214b auf die Kammer 214a durchzuführen, ohne daß eine Zeit vergeht, kommt es zu einem Rückstau. Dieser Rückstau wird mittels eines längsbeweglichen Rücklaufkanalmoduls 117 aufgefangen. Dieses federt während des Wechsels abgestützt durch Federeinrichtungen 118a, 118b entgegen der Laufrichtung der Formbackenfolgen zurück und kompensiert damit einen ansonsten auftretenden Rückstau. Ein Freiraum 120 zwischen dem Rücklaufkanalmodul 117 und dem nachfolgenden Maschinentisch bzw. nachfolgenden Abschnitten der Umlaufführung sollte dabei so bemessen sein, daß die angestrebte Kompensation erfolgen kann. Die Wechseleinrichtungen 200 bewegen sich mit den Rücklaufmodulen mit bzw. sind starr mit den jeweiligen Rücklaufmodulen 117 verbunden.

Die in einer der Kammern 214a, 214b enthaltenen Formbacken bzw. Wechselformbakken mit Sonderprofilen 212 können einzeln, paarweise oder zu mehreren vorgesehen und damit ausgetauscht werden.

In der Fig. 2 ist zu erkennen, daß die Kammern 214a, 214b im Prinzip identisch ausgebildet sind und als Teil der Umlaufführung austauschbar bzw. einsetzbar sind. Die Wechseleinrichtung mit den Abschnitten 210, 216, 214a, 214b ist mit dem durch das Bezugszeichen 117 angedeuteten Rücklaufmodul über den Freiraum 120 relativ zu dem Maschinentisch 150 beweglich. Eine Platte 152 deckt den Corrugator 100 ab und dient auch als Begrenzung der Umlaufführung, als Kühlluftaufnahmevolumen, usw.

Die Kammer 214b weist einen normalen Formbacken 110 auf, der zur Herstellung der Wellungen eines normalen Wellrohres ausgebildet ist. Die Kammer 214a weist einen Sonderformbacken 212 auf, der nach Bedarf eventuell auch kurzzeitig in die Formbakkenfolge eingesetzt bzw. eingeschossen werden kann. Mit dem Begriff "Einschießen" ist dabei zum Ausdruck gebracht, daß der Wechsel so schnell wie möglich zu erfolgen hat. Im Idealfall wird der Wechsel so schnell durchgeführt, daß der Zwischenraum 120 gemäß Fig. 1 nicht erforderlich ist. Real wird dies jedoch sehr schwer zu bewerkstelligen sein.

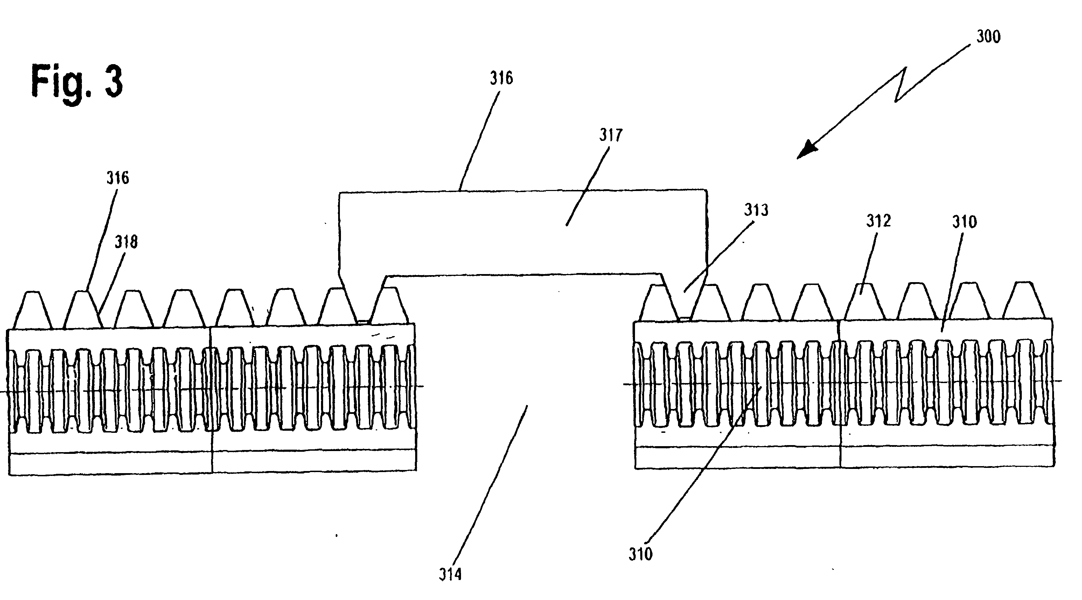

In Fig. 3 ist eine bevorzugte Ansführungsform 300 dargestellt, bei der ein Platzhalter 316 in eine Folge von Formbacken 310 eingreift. Ein Freiraum 314 zwischen den aufeinanderfolgenden Formbacken 310 ist bereits mittels einer Wechseleinrichtung, beispielsweise 200 gemäß den Fig. 1 oder 2, entnommen worden und ist noch durch einen Wechselformbacken mit einem Sonderprofil zu ersetzen.

Die Formbacken 310 weisen eine Zahnung 312, 316 auf. Mittels dieser Zahnung werden die Formbacken vorangetrieben und in eine Umlaufführung geführt. Die Zahnungen 316, 312 weisen eine schräge Flanke bzw. eine Steigung 318 auf, in die entsprechende Zähne 313 des Platzhalters 316 eingreifen. Ein Übergriffsbereich 317 des Platzhalters 316 weist eine Länge auf, die wenigstens der Länge eines Formbackens 310 entspricht. Vorteilhafterweise ist der Übergriffsbereich 317 weiter, und zwar so weit, daß beim Eingreifen des Platzhalters 316 in die Formbacken 310 der Formbackenfolge die Formbacken auseinander gedrückt werden, so daß es einfacher ist, den auszutauschenden Formbacken gegen den Wechselformbacken mit Sonderprofil zu tauschen. Dabei wird der Platzhalter 316 mit seinen Erstreckungen bzw. Zähnen 313 in Richtung der Zahnungen der Formbacken 310 getrieben, wobei anfangs die Zahnungen 313 mit den Schrägen 318 der Zahnungen 316, 312 an einem oberen Bereich in Kontakt treten. Anschließend wandert die Schräge der Zahnungen 313 entlang der Schräge 318 der Zahnungen 312, 316, wobei eine resultierende Kraft in Richtung der wandernden Formbacken in der Formbackenfolge erzeugt wird. Aufgrund dieser Kraft werden die Formbacken der Formbackenfolge auseinander getrieben und der Platz des zu wechselnden Formbackens wird erweitert und gehalten bis der Wechselformbacken mit Sonderprofil eingefügt worden ist. Anschließend wird der Platzhalter 316 wieder aus dem Eingriff mit den Formbacken entfernt.

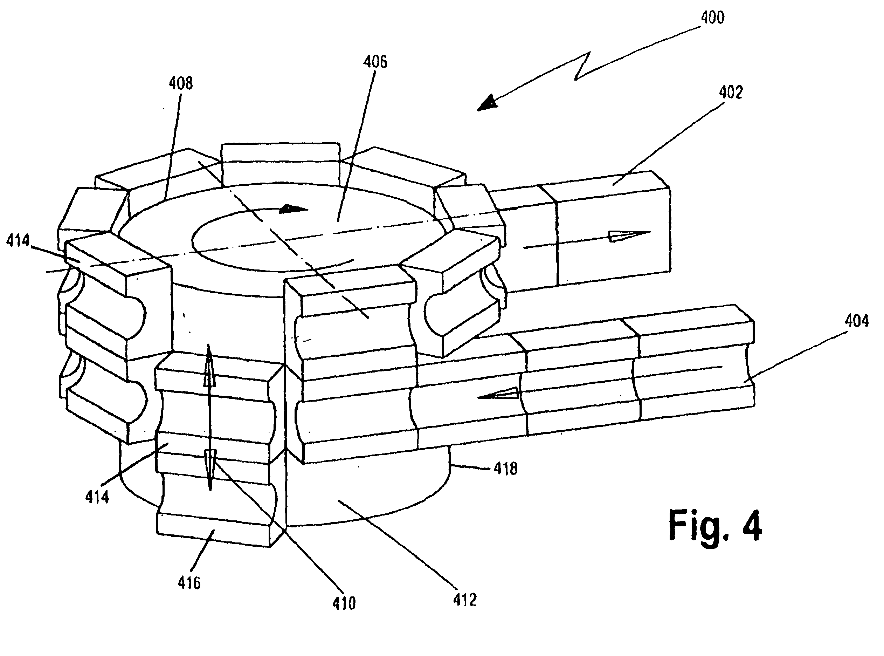

Gemäß Fig. 4 wird eine andere vorteilhafte Ausführungsform 400 einer Formvorrichtung mit Merkmalen gemäß der Erfindung beschrieben. Zu erkennen ist eine hinlaufende Folge 404 von Formbacken und eine rücklaufende Folge 402 von Formbakken.

In einem Wendebereich für die Folge der Formbacken ist ein Führungsabschnitt für die Folge der Formbacken vorgesehen. Oberhalb des Führungsabschnittes ist eine obere Drehscheibe 408 eines Magazinabschnittes 406 angeordnet. Die Drehscheibe 408 des Magazinabschnitts 406 enthält mehrere Wechselformbacken 414, die im Wendebereich mittels einer (nicht dargestellten Wechselvorrichtung) entlang dem Doppelpfeil 410 senkrecht zur Bewegungsrichtung der Formbackenfolge bewegt werden können. Dabei wird ein Wechselformbacken 414 gegen einen normalen Formbacken 416 ausgetauscht. Im Bereich einer Drehscheibe 418 eines Park-Magazinabschnittes 412 kann der ausgewechselte Normalformbacken 416 aufbewahrt werden, während der Wechselformbacken 414 in der Folge der Formbacken mitgeführt wird, um ein Sonderprofil in ein Wellrohr bzw. in ein beliebig ausgeführtes Rohr einzuformen.

## Patentansprüche

1. Formvorrichtung, insbesondere Corrugator (100), zur Herstellung von Rohren, bevorzugt Wellrohren, mit wenigstens zwei Folgen (102, 104) von umlaufenden Formbacken (110, 112) mit bevorzugt jeweils der gleichen Rohrformausprägung, die in einem vorgegebenen Bereich einen Formkanal (114) bilden, wobei die Folgen in jeweiligen Umlaufführungen (106, 108) geführt sind, mit wenigstens einer Wechselform (212), insbesondere einem Wechselformbacken, mit einer anderen Rohrformausprägung, beispielsweise einem Markierungs- oder Muffenabschnitt; und wenigstens einer Wechseleinrichtung (200) entlang wenigstens einer der Umlaufführungen (106, 108) wenigstens einer der Formbackenfolgen**dadurch gekennzeichnet, dass** im Verlauf der Umlaufführung(en), bevorzugt nahe der Wechseleinrichtung (200), eine Puffereinrichtung (117, 118a, 118b, 120) bzw. -strecke angeordnet ist, die bei Aktivierung der Wechseleinrichtung (200) eine Rückstaustrecke kompensiert, wobei bevorzugt die Puffereinrichtung der Wechseleinrichtung (200) zugeordnet ist.

2. Formvorrichtung nach Anspruch 1, **dadurch gekennzeichnet, dass** die Wechseleinrichtung (200) wenigstens zwei Kammern (214a, 214b) aufweist, die jeweils einen Einund einen Ausgang aufweisen, wobei die Kammern wenigstens angenähert wie die Umlaufführung ausgebildet sind, wobei bevorzugt eine der Kammern (214a, 214b) der Wechseleinrichtung wenigstens einen Wechselformbacken (212) aufweist.

3. Formvorrichtung nach einem der Ansprüche 1 oder 2, **dadurch gekennzeichnet, dass** die Wechseleinrichtung (200) einen Antriebsabschnitt (210) aufweist, um eine Kammer mit wenigstens einem Formbacken aus der Umlaufführung zu entfernen und eine andere Kammer mit wenigstens einem Formbacken bzw. Wechselformbacken in die Umlaufführung einzufügen, bzw. dass die Anzahl der Formbacken geringer ist als die maximale Anzahl der Formbacken, die eine Umlaufführung aufnimmt, wobei eine Beförderungseinrichtung vorgesehen ist, um die Formbacken außerhalb des Formbackenkanals (114) schneller zu bewegen als im Verlauf des Formkanals.

4. Formvorrichtung nach einem der Ansprüche 1 bis 3, **dadurch gekennzeichnet, dass** die Wechseleinrichtung (200) in einem Bereich der Umlaufführung angeordnet ist, in dem der Formkanal (114) offen, das heißt die Formbacken (110, 112) nicht geschlossen sind, insbesondere in einem linearen Bereich (115a, 115b) auf der Rückseite des Formkanals (114) oder in einem Wendebereich (115c, 115d) an einem Ende des Formkanals (114).

5. Formvorrichtung nach einem der Ansprüche 1 bis 4, **dadurch gekennzeichnet, dass** der Antriebsabschnitt (210) einen Querschieber aufweist, der die eine der Kammern in die Umlaufführung(en) einfügt bzw. die in der Umlaufführung befindliche Kammer entfernt, wobei der Querschieber bevorzugt in der Ebene der Umlaufführungen linear bewegbar oder senkrecht dazu linear bewegbar ausgebildet ist.

6. Formvorrichtung nach Anspruch 1, **dadurch gekennzeichnet, dass** die Pufferstrecke einstellbar ist und ein Federweg der Puffereinrichtung wenigstens so groß ist, so dass bei einer vorgegebenen Umlaufgeschwindigkeit der Formbacken und bei einer vorgegebenen bevorzugt veränderbaren Bewegungsgeschwindigkeit der Wechseleinrichtung ein Rückstau kompensierbar ist.

7. Formvorrichtung nach einem der Ansprüche 1 bis 6, **dadurch gekennzeichnet, dass** am Verlauf wenigstens einer Umlaufführung eine Fühleinrichtung (160) angeordnet ist, um mit dieser die Position wenigstens eines Formbackens zu fühlen, wobei bevorzugt aufgrund des Fühlergebnisses die Wechseleinrichtung(en) (200) derart aktivierbar ist (sind), dass die eine Kammer (214b) gegen die andere Kammer (214a) austauschbar ist, wenn die Kammerbegrenzungen bzw. die Begrenzungen der Wechseleinrichtung(en) nicht mit Formbacken kollidieren bzw. mit Stoßstellen zwischen den Formbacken der Formbackenfolge fluchten.

8. Formvorrichtung nach einem der Ansprüche 1 bis 5, **dadurch gekennzeichnet, dass** die Wechseleinrichtung einem Platzhalter (316) zugeordnet ist, bzw. der Platzhalter eine mit der Formbackenfolge mitlaufende Trägerbacke ist, an der eine Wechselform bzw. ein Formprofilabschnitt festlegbar ist, wobei die Wechseleinrichtung einen Wechsel des Formprofilabschnittes vornimmt, wobei der Platzhalter (316) bevorzugt einen Übergriffsbereich (317) aufweist, der von einem Formbacken zu einem übernächsten Formbacken übergreift, wobei der Platzhalter Eingriffsabschnitte (313) aufweist, die in dem Formbacken und dem übernächsten Formbacken eingreifen.

9. Formvorrichtung nach einem der Ansprüche 1 bis 8, **dadurch gekennzeichnet, dass** an Wendebereichen (115c, 115d) der Formbackenfolgen ein wenigstens zeitweise mit einer Formbackenfolge mitlaufender Magazinabschnitt (406, 408, 412, 418) angeordnet ist, an dem die Wechseleinrichtung (200) bevorzugt mitlaufend vorgesehen ist, wobei bevorzugt mehrere Wechselformbacken auch mit unterschiedlichen Profilen an bzw. in dem Magazinabschnitt (406, 408) angeordnet sind, wobei die Wechseleinrichtung (200) auf die Wechselformbacken zugreifen kann, und dass bevorzugt ein Park-Magazinabschnitt (412) gegenüber dem Magazinabschnitt (406, 408) vorgesehen ist, um durch Wechselformbacken (416) ersetzte Formbacken (416) aufzunehmen.

## Claims

1. A moulding apparatus, in particular a corrugator (100), for the manufacture of pipes, preferably corrugated pipes, having at least two series (102, 104) of circulating mould jaws (110, 112) having preferably the same pipe moulding in each case, which in a predetermined region form a mould channel (114), the series being guided in respective circulation guides (106, 108), having at least one exchange mould (212), in particular an exchangeable mould jaw, with a different pipe moulding, for example a marking or sleeve section; and at least one exchange device (200) along at least one of the circulation guides (106, 108) of at least of one of the series of mould jaws,
**characterised in that** in the path of the circulation guide(s), preferably close to the exchange device (200), is disposed a buffer device (117, 118a, 118b, 120) or section, which upon the activation of the exchange device (200) compensates a backpressure section, the buffer device preferably being associated with the exchange device (200).

2. A moulding apparatus according to Claim 1,
**characterised in that** the exchange device (200) comprises at least two chambers (214a, 214b), which each have an inlet and an outlet, the chambers being constructed at least approximately like the circulation guide, with preferably one of the chambers (214a, 214b) of the exchange device comprising at least one exchange mould jaw (212).

3. A moulding apparatus according to one of Claims 1 or 2,
**characterised in that** the exchange device (200) comprises a drive section (210) to remove a chamber with at least one mould jaw from the circulation guide and to insert another chamber with at least one mould jaw or exchange mould jaw into the circulation guide,
or **in that** the number of mould jaws is less than the maximum number of mould jaws which receives a circulation guide, with a transport device being provided in order to move the mould jaws outside the mould jaw channel (114) more quickly than in the path of the mould channel.

4. A moulding apparatus according to one of Claims 1 to 3,
**characterised in that** the exchange device (200) is disposed in a region of the circulation guide in which the mould channel is open, i.e. the mould jaws (110, 112) are not closed, in particular in a linear region (115a, 115b) on the rear side of the mould channel (114) or in a turning area (115c, 115d) at one end of the mould channel (114).

5. A moulding apparatus according to one of Claims 2 to 4,
**characterised in that** the drive section (210) comprises a cross slider, which inserts the one of the chambers into the rotation guide(s) and removes the chamber situated in the rotation guide, the cross slider preferably being constructed so that it can move linearly in the plane of the rotation guides or can move linearly perpendicularly thereto.

6. A moulding apparatus according to Claim 1,
**characterised in that** the buffer section is adjustable and a spring excursion of the buffer device is at least so great so that the mould jaw can be compensated at a predetermined rotational speed of the mould jaw and a backpressure can be compensated with a predetermined, preferably changeable speed of motion of the exchange device.

7. A moulding apparatus according to one of Claims 1 to 6,
**characterised in that** disposed on the path of at least one circulation guide is a sensor (160) to sense with this the position of at least one mould jaw, wherein the exchange device(s) (200) can be activated on the basis of the sensing result in such a manner that the one chamber (214b) can be exchanged for the other chamber (214a) when the chamber boundaries or the boundaries of the exchange device(s) do not collide with mould jaws or align with points of impact between the mould jaws of the mould jaw series.

8. A moulding apparatus according to one of Claims 1 to 5,
**characterised in that** the exchange device is associated with a placeholder (316), or the placeholder is a carrier jaw moving with the mould jaw series, to which an exchange mould or a mould profile section can be fixed, wherein the exchange device performs an exchange of the mould profile section, wherein the placeholder (316) preferably comprises an overlap region (317), which overlaps from one mould jaw to the next but one mould jaw, wherein the placeholder comprises engagement sections (313) that engage in the mould jaw and the next but one mould jaw.

9. A moulding apparatus according to one of Claims 1 to 8,
**characterised in that** at the turning regions (115c, 115d) of the mould jaw series is disposed a magazine section (406, 408, 412, 418) that travels at least temporarily with a series of mould jaws, at which the exchange device (200) is preferably provided travelling as well, several exchange mould jaws preferably also being provided with different profiles at or in the magazine section (406, 408), the exchange device (210) being able to access the exchange mould jaws,
and **in that** a parking magazine section (412) is preferably provided opposite the magazine section (406, 408) in order to receive mould jaws (416) replaced by exchange mould jaws (416).

## Revendications

1. Dispositif de formage, en particulier machine à onduler (100), pour fabriquer des tubes, de préférence des tubes ondulés, avec au moins deux séries (100, 204) de mâchoires de formage (110, 112) tournantes avec de préférence chacune la même empreinte de formage de tube, qui forment un canal de formage (114) dans une zone prédéfinie, les séries étant guidées dans des guides sans fin (106, 108) respectifs, avec au moins une forme interchangeable (212), en particulier une mâchoire de formage interchangeable, avec une autre empreinte de formage de tube, par exemple un tronçon de marquage ou un tronçon manchon, et au moins un dispositif d'échange (200) le long d'au moins l'un des guides sans fin (106, 108) d'au moins l'une des séries de mâchoires de formage, **caractérisé en ce que** dans le parcours du (des) guide(s) sans fin, de préférence à proximité du dispositif d'échange (200), est disposé un dispositif tampon (117, 118a, 188b, 120) ou parcours tampon qui, à l'activation du dispositif d'échange (200), compense un parcours de retenue, le dispositif tampon étant de préférence associé au dispositif d'échange (200).

2. Dispositif de formage selon la revendication 1, **caractérisé en ce que** le dispositif d'échange (200) comporte au moins deux chambres (214a, 214b) qui présentent chacune une entrée et une sortie, les chambres étant réalisées au moins approximativement comme le guide sans fin, de préférence l'une des chambres (214a, 214b) du dispositif d'échange comportant au moins une mâchoire de formage interchangeable (212).

3. Dispositif de formage selon l'une des revendications 1 ou 2, **caractérisé en ce que** le dispositif d'échange (200) comporte un tronçon d'entraînement (210) pour éloigner une chambre avec au moins une mâchoire de formage, et pour insérer une autre chambre avec au moins une mâchoire de formage ou une mâchoire de formage interchangeable dans le guide tournant, ou **en ce que** le nombre de mâchoires de formage est inférieur au nombre maximal de mâchoires de formage que reçoit un guide sans fin, un dispositif de transport étant prévu pour déplacer les mâchoires de formage à l'extérieur du canal de mâchoires de formage (114) plus rapidement que dans le parcours du canal de formage.

4. Dispositif de formage selon l'une des revendications 1 à 3, **caractérisé en ce que** le dispositif d'échange (200) est disposé dans une zone du guide sans fin dans laquelle le canal de formage (114) est ouvert, c'est-à-dire que les mâchoires de formage (110, 112) ne sont pas fermées, en particulier dans une zone linéaire (115a, 115b) sur le côté arrière du canal de formage (14) ou dans une zone de retournement (115c, 115d) à une extrémité du canal de formage (114).

5. Dispositif de formage selon l'une des revendications 1 à 4, **caractérisé en ce que** le tronçon d'entraînement (210) comporte un pousseur transversal qui insère l'une des chambres dans le (les) guide(s) sans fin ou qui éloigne la chambre se trouvant dans le guide sans fin, le pousseur transversal étant réalisé de préférence déplaçable linéairement dans le plan des guides sans fin ou déplaçable linéairement perpendiculairement à celui-ci.

6. Dispositif de formage selon la revendication 1, **caractérisé en ce que** le parcours tampon est réglable et une course de ressort du dispositif tampon est au moins suffisamment grande pour que, pour une vitesse de rotation prédéfinie des mâchoires de formage et pour une vitesse de déplacement de préférence variable prédéfinie du dispositif d'échange, une retenue puisse être compensée.

7. Dispositif de formage selon l'une des revendications 1 à 6, **caractérisé en ce que** sur le parcours d'au moins un guide sans fin est disposé un dispositif de détection (160) pour détecter avec celui-ci la position d'au moins une mâchoire de formage, le (les) dispositif(s) d'échange (200) pouvant être activé(s) de préférence sur la base du résultat de la détection, de manière qu'une chambre (214b) puisse être échangée contre l'autre chambre (214a), lorsque les délimitations des chambres ou les délimitations du (des) dispositif(s) d'échange n'entrent pas en collision avec des mâchoires de formage, ou sont alignées avec des joints entre les mâchoires de formage de la série des mâchoires de formage.

8. Dispositif de formage selon l'une des revendications 1 à 5, **caractérisé en ce que** le dispositif d'échange est associé à un garde-place (316), ou le garde-place est une mâchoire de support circulant avec la série de mâchoires de formage, sur laquelle peut être fixé une forme interchangeable ou un tronçon de profil de formage, le dispositif d'échange procédant à un échange du tronçon de profil de formage, le garde-place (316) présentant de préférence une zone de franchissement (317) qui est franchie par une mâchoire de formage vers la deuxième mâchoire de formage suivante, le garde-place comportant des tronçons d'engagement (313) qui s'engagent dans la mâchoire de formage et la deuxième mâchoire de formage suivante.

9. Dispositif de formage selon l'une des revendications 1 à 8, **caractérisé en ce que** dans les zones de retournement (115c, 115d) des séries de mâchoires de formage, est disposé un tronçon de magasin (406, 408, 412, 418) circulant au moins par moments avec une série de mâchoires de formage, sur lequel est prévu le dispositif d'échange (200) qui de préférence circule en même temps, plusieurs mâchoires de formage interchangeables étant disposées de préférence aussi avec différents profils sur ou dans le tronçon de magasin (406, 408), le dispositif d'échange (200) pouvant accéder aux mâchoires de formage, et **en ce que** de préférence il est prévu un tronçon de magasin d'attente (412) face au tronçon de magasin (406, 408), afin de recevoir des mâchoires de formage (415) remplacées par des mâchoires de formage interchangeables (416).
